# EUROPEAN PATENT APPLICATION

(11) **EP 4 693 946 A1**
(43) Date of publication of application: **11.02.2026**
(21) Application number: 24806318.2
(22) Date of filing: 25.04.2024
(51) Int. Cl.: H04B 7/185

(54) **SATELLITE COMMUNICATION METHOD AND APPARATUS**

(30) Priority: 12.05.2023 CN 202310541527
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Li, Shenzhen, Guangdong 518129 (CN); TIE, Xiaolei, Shenzhen, Guangdong 518129 (CN)
(74) Representative: Gill Jennings & Every LLP
(86) International application number: PCT/CN2024/089754
(87) International publication number: WO 2024/234962

(57) **Abstract**

A satellite communication method and an apparatus are disclosed and may be applied to the field of communication technologies. The method includes: The first communication apparatus generates capability information and sends the capability information. Correspondingly, a second communication apparatus receives the capability information and determines, based on the capability information, whether the first communication apparatus supports a first capability. For example, the capability information may indicate whether the first communication apparatus supports the first capability. The first capability may be a capability of still maintaining, by the first communication apparatus when a terminal device performs at least one of TA adjustment, time-frequency adjustment, and frequency offset adjustment, phase continuity of a plurality of signals used for joint channel estimation. The first communication apparatus may include the terminal device, and the second communication apparatus includes a network side apparatus serving the terminal device. Alternatively, the second communication apparatus may include the terminal device, and the first communication apparatus may include a network side apparatus serving the terminal device. The method can effectively improve performance of the joint channel estimation.

## Description

This application claims priority to Chinese Patent Application No. 202310541527.4, filed with the China National Intellectual Property Administration on May 12, 2023, and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and an apparatus.

### BACKGROUND

Compared with terrestrial communication, satellite communication has unique advantages. For example, the satellite communication can provide wider coverage areas, and satellite base stations are not vulnerable to natural disasters or external forces. If the satellite communication is introduced into future communication, communication services can be provided for some areas that cannot be covered by terrestrial communication networks, such as oceans and forests; reliability of the communication can be enhanced, for example, better communication services for airplanes, trains, and users on these transportation vehicles can be ensured; and more data transmission resources are provided for the communication, to improve network rates. Therefore, supporting both the terrestrial communication and the satellite communication is an inevitable trend of future communication, and has great benefits in terms of wide coverage, reliability, multi-connection, high throughput, and the like.

Currently, the satellite communication has been introduced into a 3^{rd} generation partnership project (3^{rd} generation partnership project, 3GPP) standard, is used as a communication scenario of 5^{th} generation (5^{th} generation, 5G) communication, and is referred to as a non-terrestrial network (non-terrestrial network, NTN). Most significant features of the satellite communication are high mobility and long communication delay. To adapt to the features of high mobility and long communication delay, timing, synchronization, hybrid automatic repeat request (hybrid automatic repeat request, HARQ), and other technologies in the satellite communication are enhanced in the standard. Transmit power and a quantity of antennas of mobile phones are limited, and a communication distance of the satellite communication is long and path losses are high. As a result, link budgets are low. Therefore, if the satellite communication is required to further support direct connection of mobile phones, coverage needs to be enhanced. Because joint channel estimation can effectively improve data decoding performance, the joint channel estimation may be used as a manner of coverage enhancement. For example, when a network side apparatus performs joint channel estimation, if a terminal device performs timing advance (timing advance, TA) adjustment in a window used for the joint channel estimation, performance of the joint channel estimation is affected. For the satellite communication, because a satellite moves very fast, and a TA changes very fast, the terminal device needs to perform TA adjustment to satisfy a synchronization requirement.

However, that the terminal device performs TA adjustment affects the performance of the joint channel estimation.

### SUMMARY

Embodiments of this application provide a satellite communication method and an apparatus, to effectively improve performance of joint channel estimation.

According to a first aspect, an embodiment of this application provides a satellite communication method. The method includes:
A first communication apparatus generates capability information, where the capability information indicates whether the first communication apparatus supports a first capability, the first capability is a capability of maintain, by the first communication apparatus, phase continuity of a plurality of signals when a terminal device performs at least one of timing advance TA adjustment, time offset adjustment, and frequency offset adjustment, the plurality of signals are used for joint channel estimation, and the first communication apparatus includes the terminal device or a network side apparatus serving the terminal device. The first communication apparatus sends the capability information.

In this embodiment of this application, the first communication apparatus sends the capability information, so that a second communication apparatus can effectively learn whether the first communication apparatus has the first capability. If the first communication apparatus has the first capability, the first communication apparatus can further ensure the phase continuity of the plurality of signals when the terminal device performs TA adjustment, so that even if the terminal device performs TA adjustment, performance of the joint channel estimation is not affected (where for example, a time domain window is not restarted), to improve the performance of the joint channel estimation. Because non-terrestrial communication has a feature of wide coverage, coverage enhancement of the non-terrestrial communication may be further implemented when performance of joint channel estimation in the non-terrestrial communication is improved.

With reference to the first aspect, in a possible implementation, the first communication apparatus includes the terminal device, and the method further includes: receiving information about a time domain window (time domain window, TDW), where the TDW is a window used for joint channel estimation; and determining the TDW based on the information about the TDW.

With reference to the first aspect, in a possible implementation, the first communication apparatus includes the network side apparatus serving the terminal device, and the method further includes: sending information about a time domain window TDW, where the TDW is a window used for joint channel estimation.

In this embodiment of this application, the network side apparatus may properly configure a window size of the TDW based on the capability information reported by the terminal device, to increase the size of the window used for the joint channel estimation as much as possible, and improve performance of the joint channel estimation.

According to a second aspect, an embodiment of this application provides a satellite communication method. The method includes:
A second communication apparatus receives capability information, where the capability information indicates whether a first communication apparatus supports a first capability, the first capability is a capability of maintaining, by the first communication apparatus, phase continuity of a plurality of signals when a terminal device performs at least one of timing advance TA adjustment, time offset adjustment, and frequency offset adjustment, and the plurality of signals are used for joint channel estimation; and the second communication apparatus includes a network side apparatus serving the terminal device, and the first communication apparatus includes the terminal device; or the second communication apparatus includes the terminal device, and the first communication apparatus includes a network side apparatus serving the terminal device. The second communication apparatus determines, based on the capability information, whether the first communication apparatus supports the first capability.

With reference to the second aspect, in a possible implementation, the second communication apparatus includes the network side apparatus serving the terminal device, and the method further includes: determining a time domain window TDW based on the capability information, where the TDW is a window used for joint channel estimation; and sending information about the TDW.

With reference to the second aspect, in a possible implementation, the second communication apparatus includes the terminal device, and the method further includes: receiving information about a time domain window TDW, where the TDW is a window used for joint channel estimation.

With reference to the first aspect or the second aspect, in a possible implementation, the capability information includes capability duration, and the capability duration indicates duration for which the first communication apparatus maintains the phase continuity of the plurality of signals when the terminal device performs at least one of the TA adjustment, the time offset adjustment, and the frequency offset adjustment.

In this embodiment of this application, the first communication apparatus may report different capability duration, so that a reporting manner is more flexible.

With reference to the first aspect or the second aspect, in a possible implementation, the capability information includes a capability index, there is a correspondence between the capability index and capability duration, the capability duration indicates duration for which the
first communication apparatus maintains the phase continuity of the plurality of signals when the terminal device performs at least one of the TA adjustment, the time offset adjustment, and the frequency offset adjustment, and the correspondence is defined in a protocol or configured by a network device.

In this embodiment of this application, the first communication apparatus may report indexes of different capability duration, to reduce signaling overheads.

With reference to the first aspect or the second aspect, in a possible implementation, the capability duration is determined based on at least one of the following information:
a speed relationship between the first communication apparatus and the second communication apparatus, where the first communication apparatus includes the terminal device, and the second communication apparatus includes the network side apparatus serving the terminal device; or the first communication apparatus includes the network side apparatus serving the terminal device, and the second communication apparatus is the terminal device;
a location relationship between the first communication apparatus and the second communication apparatus, where the first communication apparatus includes the terminal device, and the second communication apparatus includes the network side apparatus serving the terminal device; or the first communication apparatus includes the network side apparatus serving the terminal device, and the second communication apparatus is the terminal device; and
a TA drift rate of the first communication apparatus, where the first communication apparatus includes the terminal device.

In this embodiment of this application, the capability duration is determined based on the TA drift rate, so that the reported capability duration is more accurate.

With reference to the first aspect or the second aspect, in a possible implementation, the information about the TDW includes the following information: start position of the TDW and duration of the TDW; or start position of the TDW and end position of the TDW.

With reference to the first aspect or the second aspect, in a possible implementation, the capability duration being equal to 0 indicates that the first communication apparatus does not support the first capability, and the capability duration being greater than 0 indicates that the first communication apparatus supports the first capability.

With reference to the first aspect or the second aspect, in a possible implementation, a time unit of the capability duration is any one of the following: slot, symbol, millisecond, second, and subframe.

According to a third aspect, an embodiment of this application provides a first communication apparatus configured to perform the method according to any one of the first aspect or the possible implementations of the first aspect. The first communication apparatus includes a unit that performs the method according to any one of the first aspect or the possible implementations of the first aspect.

For example, the first communication apparatus may be a terminal device, a chip, a functional module, or the like.

According to a fourth aspect, an embodiment of this application provides a second communication apparatus configured to perform the method according to any one of the second aspect or the possible implementations of the second aspect. The second communication apparatus includes a unit that performs the method according to any one of the second aspect or the possible implementations of the second aspect.

For example, the second communication apparatus may be a network device, a chip, a functional module, or the like.

According to a fifth aspect, an embodiment of this application provides a first communication apparatus. The first communication apparatus includes a processor configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together. For example, the first communication apparatus may be a chip or a functional module.

In a possible implementation, the first communication apparatus further includes a transceiver. The transceiver is configured to receive a signal or send a signal. For example, the transceiver may be further configured to send capability information. For example, the transceiver may be further configured to receive information about a TDW. For example, the transceiver may be further configured to send information about a TDW.

According to a sixth aspect, an embodiment of this application provides a second communication apparatus. The second communication apparatus includes a processor configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated together. For example, the second communication apparatus may be a chip or a functional module.

In a possible implementation, the second communication apparatus further includes a transceiver. The transceiver is configured to receive a signal or send a signal. For example, the transceiver may be configured to receive capability information. For example, the transceiver may be further configured to send information about a TDW. For example, the transceiver may be further configured to receive information about a TDW.

According to a seventh aspect, an embodiment of this application provides a first communication apparatus. The first communication apparatus includes a logic circuit and an interface. The logic circuit is coupled to the interface. The interface is configured to input and/or output information. The logic circuit is configured to perform the method according to any one of the first aspect or the possible implementations.

For example, that the interface is configured to output the information may include: The interface is configured to output capability information. That the interface is configured to input the information may include: The interface is configured for information about a TDW. Alternatively, the interface is configured to output information about a TDW.

For example, the logic circuit is configured to determine the capability information.

For example, the logic circuit is further configured to determine, based on the information about the TDW, the TDW used for joint channel estimation.

According to an eighth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to any one of the second aspect or the possible implementations.

For example, that the interface is configured to input the information includes: The interface is configured to input capability information. That the interface is configured to output information includes: The interface is configured to output information about a TDW. Alternatively, the interface is configured to input information about a TDW.

For example, the logic circuit is configured to determine, based on the capability information, whether a first communication apparatus supports a first capability.

For example, the logic circuit is further configured to determine the TDW based on the capability information.

According to a ninth aspect, an embodiment of this application provides a computer-readable storage medium. The computer-readable storage medium is configured to store a computer program. When the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code. When the computer program or the computer code is run on a computer, the method according to any one of the first aspect or the possible implementations of the first aspect is performed.

According to a twelfth aspect, an embodiment of this application provides a computer program product. The computer program product includes a computer program or computer code. When the computer program or the computer code is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a communication system. The communication system includes a first communication apparatus and a second communication apparatus. The first communication apparatus is configured to perform the method according to any one of the first aspect or the possible implementations of the first aspect. The second communication apparatus is configured to perform the method according to any one of the second aspect or the possible implementations of the second aspect.

### BRIEF DESCRIPTION OF DRAWINGS

FIG. 1 is a diagram of an architecture of a communication system according to an embodiment of this application;
FIG. 2a is a diagram of a satellite communication system in a transparent transmission scenario according to an embodiment of this application;
FIG. 2b is a diagram of a satellite communication system in a regeneration scenario according to an embodiment of this application;
FIG. 2c is a diagram of a satellite communication system in a regeneration scenario according to an embodiment of this application;
FIG. 3 is a schematic flowchart of a satellite communication method according to an embodiment of this application;
FIG. 4 is a diagram of a structure of a communication apparatus according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

For ease of understanding technical solutions in this application, this application is further described below with reference to accompanying drawings.

The terms "first", "second", and the like in the specification, claims, and accompanying drawings of this application are merely used to distinguish between different objects, and are not used to describe a specific order. In addition, the terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily mean a same embodiment, and is not an independent or optional embodiment exclusive from another embodiment. It may be understood explicitly and implicitly by a person skilled in the art that embodiments described herein may be combined with other embodiments.

In this application, "at least one (piece)" means one or more, "a plurality of" means two or more, "at least two (pieces)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one of a, b, or c may represent: a, b, c, "a and b", "a and c", "b and c", or "a and b and c".

For ease of understanding technical solutions in this application, this application is further described below with reference to accompanying drawings.

The terms "first", "second", and the like in the specification, claims, and accompanying drawings of this application are merely used to distinguish between different objects, and are not used to describe a specific order. In addition, the terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily mean a same embodiment, and is not an independent or optional embodiment exclusive from another embodiment. It may be understood explicitly and implicitly by a person skilled in the art that embodiments described herein may be combined with other embodiments.

In this application, "at least one (piece)" means one or more, "a plurality of" means two or more, "at least two (pieces)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one of a, b, or c may represent: a, b, c, "a and b", "a and c", "b and c", or "a and b and c".

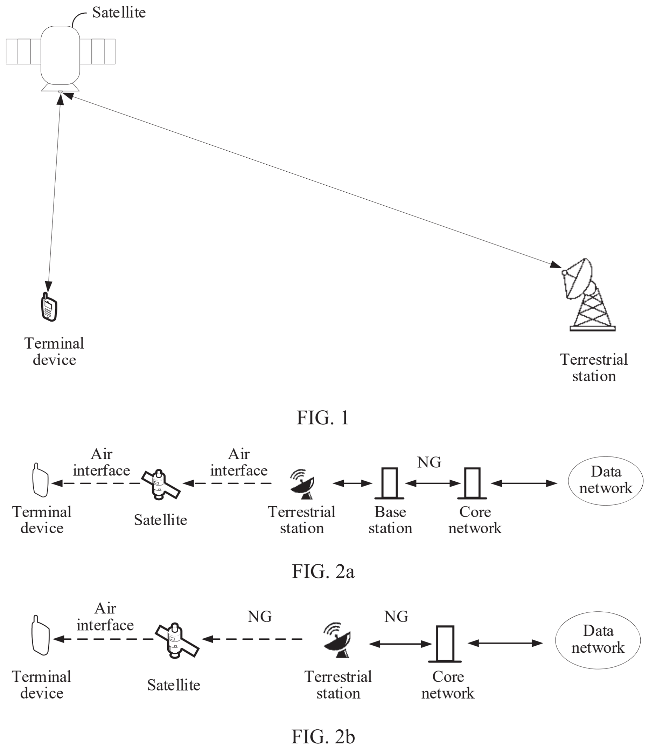

A method provided in embodiments of this application may be applied to a non-terrestrial network (non-terrestrial networks, NTN) communication system. As shown in FIG. 1, the communication system may include a terminal device, a satellite, and a terrestrial station (which may also be referred to as a gateway station or a gateway station). It may be understood that FIG. 1 shows only one satellite and one terrestrial station. In actual use, an architecture with a plurality of satellites and/or a plurality of terrestrial stations may be used as required. Each satellite may provide a service for one or more terminal devices, each satellite may correspond to one or more terrestrial stations, and each terrestrial station may correspond to one or more satellites. This is not specifically limited in embodiments of this application.

The terminal device is an apparatus having a wireless transceiver function. The terminal device may communicate with an access network device (or referred to as an access device) in a radio access network (radio access network, RAN). The terminal device may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5^{th} generation (5^{th} generation, 5G) network or a future network, or the like that has a wireless communication function. This is not limited in embodiments of this application. For example, communication may further be performed between terminal devices by using device-to-device (device-to-device, D2D) or machine-to-machine (machine-to-machine, M2M). The terminal device shown in embodiments of this application may alternatively be a device in the internet of things (internet of things, IoT). This IoT network may include, for example, the internet of vehicles. Communication manners in an internet of vehicles system are collectively referred to as vehicle-to-everything (vehicle-to-X, V2X, where X may stand for anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The terrestrial station may be configured to connect a satellite to a base station, or a satellite to a core network. The satellite may provide a radio access service to a terminal device, schedule a radio resource to an accessed terminal device, and provide a reliable radio transmission protocol, a data encryption protocol, and the like. In an example, the satellite may be an artificial earth satellite, a high-altitude aircraft, or the like that is used as a wireless communication base station, for example, an evolved NodeB (evolved NodeB, eNB) and a next generation NodeB (next generation NodeB, gNB). In another example, the satellite may alternatively serve as a relay of these base stations, and transparently transmit signals of these base stations to the terminal device.

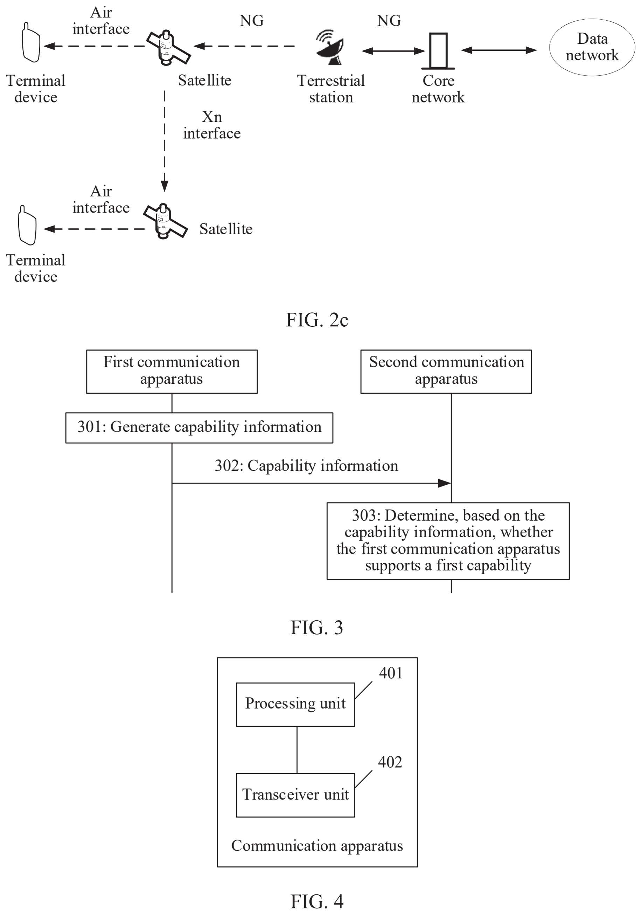

Therefore, in some implementations of this application, for example, in a satellite transparent transmission scenario, a network device may be the base station (which may also be referred to as a ground base station) shown in FIG. 1. FIG. 2a is a diagram of a satellite communication system in a transparent transmission scenario according to an embodiment of this application. For example, a terminal device may access a network through an air interface (where the air interface may be various types of air interfaces, for example, a 5G air interface), and a network device may be deployed on a ground base station. A satellite is connected to a terrestrial station through a radio link. The terrestrial station and the ground base station are connected to a core network in a wired or wireless manner. A radio link may exist between satellites. In the system shown in FIG. 2a, the satellite may have a transparent transmission and forwarding function. In some other implementations of this application, for example, in a regeneration scenario of the satellite, the network device may be the satellite shown in FIG. 1. FIG. 2b is a diagram of a satellite communication system in a regeneration scenario according to an embodiment of this application. For example, a terminal device may access a network through an air interface (where the air interface may be various types of air interfaces, for example, a 5G air interface), and a network device may be deployed on a satellite (for example, in a regeneration mode of the satellite). For example, a base station or some functions of the base station are deployed on the satellite, and signaling exchange and user data transmission between base stations may be completed between satellites, as shown in FIG. 2c.

For example, network elements and interfaces between the network elements in FIG. 2a to FIG. 2c may be shown as follows.

The terminal device may access a satellite network through the air interface and initiates services such as calls and internet access. The base station may be configured to provide a radio access service, schedule a radio resource to an access terminal device, and provide a reliable radio transmission protocol, a data encryption protocol, and the like. The terrestrial station may be configured to be responsible for forwarding signaling and service data between the satellite and the core network. The core network may be configured for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics collection, and the like. The air interface shown in FIG. 2a to FIG. 2c may be understood as a radio link between a terminal and the base station, or a radio link between the satellite and the terrestrial station. An Xn interface may be understood as an interface between base stations, and is mainly configured to exchange signaling such as handover. An NG interface may be used as an interface between the base station and the core network, and is configured to exchange signaling such as non-access stratum (non-access stratum, NAS) signaling of the core network and service data of a user. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (none-geostationary earth orbit, NGEO), a high altitude platform station (high altitude platform station, HAPS), or the like. A specific type of the satellite is not limited in embodiments of this application.

In some deployments of the network device, the network device may include a central unit (central unit, CU), a distributed unit (distributed unit, DU), and the like. In some other deployment of the network device, the CU may further include a CU-control plane (control plane, CP) and a CU-user plane (user plane, UP). In still some other deployments of the network device, the network device may alternatively be of an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a module in the access network device, or the like. In an ORAN system, a CU may also be referred to as an open (open, O) CU, a DU may also be referred to as an O-DU, a CU-CP may also be referred to as an O-CU-CP, a CU-UP may also be referred to as an O-CU-UP, and an RU may also be referred to as an O-RU. The deployment manner of the network device listed herein is merely an example. With evolution of a standard technology, the network device may have another deployment manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions and the network architecture provided in embodiments of this application are also applicable to similar technical problems.

A demodulation reference signal (demodulation reference signal, DMRS) is mainly used for channel estimation, and therefore is used as a demodulation reference signal for uplink and downlink data. To improve accuracy of channel estimation and data decoding performance, during actual application, detection results of a plurality of DMRSs are used to perform joint channel estimation. Some conditions are needed for performing joint channel estimation. For example, phases of a plurality of signals corresponding to the joint channel estimation need to be continuous during reception. For example, power (for example, receive power) of the plurality of signals corresponding to the joint channel estimation may be consistent, or may be in a specific value range. The plurality of signals corresponding to the joint channel estimation may also be referred to as a plurality of signals used for the joint channel estimation, which are referred to as a plurality of signals for short. For example, the plurality of signals may be a plurality of DMRS signals. For another example, the plurality of signals may be a combination of a plurality of DMRSs and data. For another example, each of the plurality of signals may include a DMRS and data. A specific quantity of signals corresponding to the joint channel estimation is not limited in embodiments of this application. The descriptions of the plurality of signals herein are also applicable to the following descriptions.

In an example, for uplink communication, if a terminal device sends a plurality of signals, phase continuity of the plurality of signals received by a network device needs to be maintained. The phase continuity is maintained, so that performance of joint channel estimation can be ensured. For example, power of the plurality of signals received by the network device may be consistent, or may be in a specific value range. In another example, for downlink communication, if a network device sends a plurality of signals, phase continuity of the plurality of signals received by a terminal device needs to be maintained. The phase continuity is maintained, so that performance of joint channel estimation can be ensured. For example, power of the plurality of signals received by the terminal device may be consistent, or may be in a specific value range.

However, during actual application, the phase continuity of the plurality of signals is usually damaged in some cases, for example, uplink-downlink switching, the terminal device performing timing advance (timing advance, TA) adjustment, the terminal device performing frequency offset adjustment, and the terminal device performing time offset adjustment (performing an adjustment step by the UE affects a phase, and consequently phases of the plurality of signals sent by the UE are discontinuous). For terrestrial communication, when the foregoing cases occur, joint channel estimation in a current window cannot continue to be performed. In other words, when the foregoing cases occur, joint channel estimation cannot continue to be performed, and adjustment of a time domain window (time domain window, TDW) is triggered. Descriptions of the TDW may be provided as follows.

Generally, a network device configures, based on at least one of a capability reported by a terminal device and a data scheduling scheme, a window (that is, a TDW) used for joint channel estimation. For example, the TDW may include a nominal TDW (nominal TDW, N-TDW) and an actual TDW (actual TDW, A-TDW). The TDW configured by the network device may be understood as an N-TDW. However, during actual application, due to many factors, the window used for joint channel estimation cannot be measured based on a size of the N-TDW, for example, phase discontinuity of a plurality of signals, uplink-downlink switching, timing advance adjustment, frequency offset adjustment, time-frequency adjustment, and time-frequency offset adjustment. All of these events trigger division of the N-TDW into a plurality of A-TDWs. For example, once the foregoing events occur in a current window, the current window (which may be understood as an A-TDW) is ended, and a new A-TDW is started. Therefore, a window actually used for performing joint channel estimation may be understood as an A-TDW. It may be considered that different joint channel estimations are performed in different A-TDWs. It may be understood that the trigger event of the A-TDW described herein may also be referred to as a trigger condition of the A-TDW, or a trigger condition of a start point of the A-TDW. Descriptions of the trigger condition of the A-TDW are also applicable to the following descriptions.

For the terrestrial communication, because a TA drift rate of the UE is not high (where for example, the TA drift rate is less than or equal to a threshold), the UE may not perform TA adjustment in the A-TDW, and the UE may not perform TA adjustment in a long period of time (in other words, a window of the A-TDW may last for a long period of time, for example, window duration of the A-TDW may be greater than a duration threshold), to ensure that phase continuity of a plurality of signals is not damaged, so as to ensure the phase continuity when the plurality of signals reach the network device (or the terminal device).

However, for non-terrestrial communication, because a satellite moves very fast, and a TA drift rate also changes very fast (where for example, the TA drift rate is greater than a threshold), if the UE does not perform TA adjustment, the UE cannot satisfy a synchronization requirement. Consequently, uplink out-of-synchronization is caused. If the manner for the terrestrial communication is still used, when the UE performs TA adjustment to trigger a new A-TDW, joint channel estimation cannot be performed (which may also be understood as that execution of joint channel estimation cannot be ensured in a current window). Consequently, it is difficult to support joint channel estimation in the non-terrestrial communication, and performance cannot be improved.

In view of this, embodiments of this application provide a satellite communication method and an apparatus, to effectively ensure performance of joint channel estimation. For example, according to the method provided in embodiments of this application, a window size of a TDW may be increased, to ensure performance of joint channel estimation and enhance coverage.

FIG. 3 is a schematic flowchart of a satellite communication method according to an embodiment of this application. For example, a first communication apparatus may be a terminal device, a chip disposed in the terminal device, a functional module in the terminal device, or the like, and a second communication apparatus may be a network device, a chip disposed in the network device, or a functional module in the network device. As described above, the network device may include an access network device, a module, or the like in an O-RAN architecture. Alternatively, the first communication apparatus may be a network device, or a chip or a functional module disposed in the network device, and the second communication apparatus is a terminal device, or a chip, a functional module, or the like disposed in the terminal device. For detailed descriptions of the terminal device and the network device, refer to FIG. 1 and FIG. 2a to FIG. 2c. Details are not described herein again. A network side apparatus described below may be understood as a network device, or a chip, a functional module, or the like disposed in the network device. For ease of description, in specific examples, the terminal device and the network device are used as an example for description, but this should not be construed as a limitation on embodiments of this application. As shown in FIG. 3, the method includes the following steps.

301: The first communication apparatus generates capability information.

A first capability indicated by the capability information is first described below in detail.

The first capability may be related to a factor affecting phase continuity of a plurality of signals. The phase continuity of the plurality of signals may satisfy at least one of the following: A phase difference between signals in two adjacent time units is less than or equal to a phase difference threshold (which may also be understood as that a phase difference between signals in two adjacent time units is in a specific requirement range), and a maximum phase variation of signals in a plurality of time units is less than or equal to a variation threshold (which may also be understood as that a maximum phase variation of the signals in a plurality of time units is in a specific requirement range, or may be understood as that a difference between a maximum phase and a minimum phase of the signals in a plurality of time units is less than or equal to a threshold).

For example, one time unit may be used for measuring one signal, and a unit of the time unit may be any one of the following: orthogonal frequency division multiplexing (orthogonal frequency division multiplexing, OFDM) symbol, slot, millisecond, second, subframe, and the like. One time unit may correspond to the foregoing one or more units. For example, one time unit corresponds to one or two OFDM symbols. Alternatively, one time unit may include a plurality of OFDM symbols. For another example, one time unit corresponds to one or more slots. For example, when one time unit corresponds to one OFDM symbol, a phase difference between two signals on two adjacent OFDM symbols may be less than or equal to the phase difference threshold. For another example, when one time unit corresponds to one slot, a phase difference between two signals in two adjacent slots may be less than or equal to the phase difference threshold. The phase difference threshold, the variation threshold, and the like may be defined in a protocol, configured by a network device, or the like. A value and a configuration manner of each threshold are not limited in this embodiment of this application. For related descriptions of the plurality of signals, refer to the foregoing descriptions.

In an example, the first communication apparatus may be a terminal device, and the second communication apparatus is a network side apparatus serving the terminal device. In this case, the foregoing plurality of signals may be understood as a plurality of signals that are sent by the terminal device and that can be used for joint channel estimation, or may be understood as signals used by a network device to perform joint channel estimation. The phase continuity of the plurality of signals may be understood as phase continuity of the plurality of signals received by the network device. For example, when sending the plurality of signals, the terminal device may maintain the phase continuity.

In another example, the second communication apparatus may be a terminal device, and the first communication apparatus may be a network side apparatus (for example, a network device) serving the terminal device. The foregoing plurality of signals may be understood as a plurality of signals that are sent by the network device and that can be used by the terminal device to perform joint channel estimation. The phase continuity of the plurality of signals may be understood as phase continuity of the plurality of signals received by the terminal device. For example, when sending the plurality of signals, the network device may maintain the phase continuity.

As described above, factors affecting the phase continuity of the plurality of signals may include TA adjustment, frequency offset adjustment, time offset adjustment, time-frequency offset adjustment, and the like. Therefore, the first capability may have the following meanings.

First, the first capability may be a capability of maintaining phase continuity when the terminal device performs TA adjustment, may be understood as a capability of maintaining phase continuity of a plurality of signals when the terminal device performs TA adjustment, may be understood as a capability of not damaging phase continuity of a plurality of signals when the terminal device performs TA adjustment, or may be understood as a capability of not causing phase discontinuity of a plurality of signals even if the terminal device performs TA adjustment. For example, if the terminal device sends a plurality of signals, and the network device performs joint channel estimation based on the plurality of signals, the first capability may be a capability of maintaining, when the terminal device performs TA adjustment, phase continuity of the plurality of signals received by the network device. For another example, if the network device sends a plurality of signals, and the terminal device performs joint channel estimation based on the plurality of signals, the first capability may be maintaining, when the terminal device performs TA adjustment, phase continuity of the plurality of signals received by the terminal device.

In an example, to avoid a large amount of signaling overheads caused by using signaling of the network device to indicate the terminal device to perform TA adjustment, the terminal device may independently perform TA adjustment, that is, open-loop TA adjustment, based on ephemeris information and a location of the terminal device. Therefore, the TA adjustment shown above may include open-loop TA adjustment or open-loop TA compensation. In another example, the network device may indicate, by sending a timing advance command (timing advance command, TAC), the terminal device to perform additional TA compensation. Therefore, the TA adjustment described above may alternatively include TA adjustment for implementing timing advance compensation in an open-loop and closed-loop combination manner. A specific manner of the TA adjustment is not limited in this embodiment of this application.

Second, the first capability may be a capability of maintaining the phase continuity when the terminal device performs frequency offset adjustment, may be understood as a capability of maintaining the phase continuity of the plurality of signals when the terminal device performs frequency offset adjustment, may be understood as a capability of not damaging the phase continuity of the plurality of signals when the terminal device performs frequency offset adjustment, or may be understood as a capability of not causing phase discontinuity of the plurality of signals even if the terminal device performs frequency offset adjustment. For example, if the terminal device sends the plurality of signals, and the network device performs joint channel estimation based on the plurality of signals, the first capability may be a capability of maintaining, when the terminal device performs frequency offset adjustment, the phase continuity of the plurality of signals received by the network device. For another example, if the network device sends the plurality of signals, and the terminal device performs joint channel estimation based on the plurality of signals, the first capability may be maintaining, when the terminal device performs frequency offset adjustment, the phase continuity of the plurality of signals received by the terminal device.

For example, the foregoing frequency offset adjustment may alternatively be replaced with time offset adjustment or time-frequency offset adjustment. For example, the first capability may be a capability of maintaining the phase continuity when the terminal device performs at least one of the frequency offset adjustment and the time offset adjustment. For another example, the first capability may be understood as a capability of maintaining the phase continuity when the terminal device performs open-loop time-frequency offset adjustment based on a location of the terminal device and a location of a satellite. The terminal device can ensure frequency offset synchronization by performing frequency offset adjustment, and can ensure time offset synchronization by performing time offset adjustment. For example, the frequency offset adjustment may alternatively include frequency offset compensation, open-loop frequency offset compensation, or the like. The time offset adjustment may include time offset compensation, open-loop time offset compensation, or the like.

In an example, when the first communication apparatus is the terminal device, the capability information may indicate whether the terminal device supports the first capability (as described in the following Implementation 1), or the capability information may indicate a capability level or a capability magnitude supported by the terminal device (as described in the following Implementation 2 to Implementation 4). In another example, when the first communication apparatus is the network device, the capability information may indicate whether the network device supports the first capability, or a capability level or a capability magnitude supported by the network device. For detailed content of the capability information, refer to the following Implementation 1 to Implementation 4. Details are not described herein.

It may be understood that the capability indicated by the capability information may be either of the first meaning and the second meaning described above, or may be a combination of the foregoing two manners. For example, the capability information may indicate a capability of maintaining the phase continuity when the terminal device performs TA adjustment, and may indicate a capability of maintaining the phase continuity when the terminal device performs frequency offset adjustment. For a combination manner, details are not listed herein one by one herein. For ease of description, the first meaning is used as an example for some descriptions of the first capability described below, and the second meaning is used as an example for other descriptions of the first capability described below.

A name of the first capability described in this embodiment of this application is merely an example. A specific name of the capability indicated by the capability information is not limited in this embodiment of this application. During actual application, the phase continuity of the signals may be affected by another factor. Therefore, the first capability may have more other meanings as the factors affecting the phase continuity of the plurality of signals increases.

In an example, the first communication apparatus may determine the capability information based on a hardware capability of the first communication apparatus. The hardware capability may include at least one of the following: phase compensation capability, phase adjustment capability, and sampling adjustment capability. For example, if the first communication apparatus has a strong hardware capability, it indicates that the first communication apparatus can maintain the phase continuity of the plurality of signals when the terminal device performs TA adjustment. For another example, duration for which the phase continuity of the plurality of signals can be maintained when the terminal device performs TA adjustment may be determined based on the hardware capability of the first communication apparatus.

In another example, the first communication apparatus may determine the capability information based on at least one of a speed relationship between the first communication apparatus and the second communication apparatus, a location relationship between the first communication apparatus and the second communication apparatus, and a TA drift rate of the first communication apparatus. For descriptions of the speed relationship, the location relationship, the TA drift rate, and the capability information, refer to Implementation 4. Details are not described herein.

It may be understood that the first communication apparatus may determine the capability information based on any one of the foregoing two examples, or may determine the capability information based on a combination of the foregoing two examples.

302: The first communication apparatus sends the capability information. Correspondingly, the second communication apparatus receives the capability information.

It may be understood that, when the first communication apparatus is the terminal device, that the first communication apparatus sends the capability information may also be understood as that the first communication apparatus reports the capability information. When the first communication apparatus is the network device, the first communication apparatus may send the capability information in a unicast or broadcast manner.

In a possible implementation, the first communication apparatus may further send auxiliary information. The auxiliary information may indicate a maximum duration window in which the phase continuity of the plurality of signals is maintained and power of the plurality of signals is constant. For example, the maximum duration window may be understood as a size of a TDW when the terminal device does not perform TA adjustment. It may be understood that the auxiliary information described herein may also be referred to as auxiliary information 1, and the capability information may also be referred to as auxiliary information 2; the capability information may also be referred to as capability information 1, and the auxiliary information may also be referred to as capability information 2; or the like. Specific names of the capability information and the auxiliary information are not limited in this embodiment of this application.

In an example, the first communication apparatus may separately send the auxiliary information and the capability information. Generally, the maximum duration window indicated by the auxiliary information is fixed, and capability duration (which may also be understood as a duration window) indicated by the capability information may change with the TA drift rate, the location relationship between the first communication apparatus and the second communication apparatus, the speed relationship between the first communication apparatus and the second communication apparatus, and the like. Therefore, the manner of reporting separately is more flexible.

In another example, the first communication apparatus may further send duration with reference to the maximum duration window (which may be understood as a first duration window) indicated by the auxiliary information and the capability duration (which may be understood as a second duration window) indicated by the capability information. The duration may be a smaller one between the first duration window and the second duration window. In this reporting manner, overheads can be reduced.

It may be understood that a size relationship between the first duration window and the second duration window is not limited in this embodiment of this application. When the auxiliary information and the capability information are separately reported, a reporting sequence of the two pieces of information is not limited.

303: The second communication apparatus determines, based on the capability information, whether the first communication apparatus supports the first capability.

For example, the second communication apparatus determines, based on the capability duration indicated by the capability information, capability duration for which the first communication apparatus supports the first capability. For example, the second communication apparatus may determine, based on a correspondence between the TA drift rate and the capability duration, the capability duration for which the first communication apparatus supports the first capability. For content determined by the second communication apparatus based on the capability information, refer to the following Implementation 1 to Implementation 4.

In a possible implementation, the method shown in FIG. 3 may further include: After receiving the capability information, the second communication apparatus sends feedback information of the capability information. Correspondingly, the first communication apparatus receives the feedback information.

In an example, the feedback information may be used for acknowledgment of the capability information, where the feedback information indicates that the second communication apparatus has correctly received the capability information, and acknowledges a capability of the first communication apparatus. In another example, the feedback information may further indicate prolonged capability duration. For example, the second communication apparatus may prolong, based on a hardware capability of the second communication apparatus when the UE performs TA adjustment, the capability duration reported by the first communication apparatus. In still another example, the first communication apparatus sends the capability information of the first communication apparatus to the second communication apparatus, and the second communication apparatus may send capability information of the second communication apparatus to the first communication apparatus. After both two communication parties learn of the capability information of each other, the first communication apparatus or the second communication apparatus may correspondingly adjust a window size of a TDW. For example, the window size of the TDW may be greater than the capability duration indicated by the capability information respectively reported by the two communication parties. After the window size of the TDW is adjusted, an adjustment result may be notified to a peer end.

In a possible implementation, the method shown in FIG. 3 may further include: The network device determined, based on the capability information, a TDW used for joint channel estimation. For example, the network device may determine the TDW based on the capability information reported by the terminal device.

The TDW herein may be at least one of an N-TDW and an A-TDW. For example, when the first communication apparatus is the terminal device, and the second communication apparatus is the network device, the network device may perform joint channel estimation in a window size of the A-TDW. For example, when the first communication apparatus is the network device, and the second communication apparatus is the terminal device, the terminal device may perform joint channel estimation in a window size of the A-TDW. Joint channel estimations performed in different A-TDWs may be considered as different joint channel estimations.

In an example, that the network device determines the TDW based on the capability information includes: The network device determines the N-TDW based on the capability information. For example, the capability duration indicated by the capability information may be used as a window size of the N-TDW. For example, when the capability information indicates whether the terminal device supports the first capability, the network device may determine the N-TDW based on the capability information, a data scheduling scheme, and a capability of the network device. For example, when the capability information indicates whether the network device supports the first capability, the network device may determine the N-TDW based on the capability information and a data scheduling scheme. In another example, that the network device determines the TDW based on the capability information includes: The network device determines the N-TDW based on the capability information and the auxiliary information. For example, a window size of the N-TDW may be a smaller one between the capability duration indicated by the capability information and the maximum duration window indicated by the auxiliary information. For example, when the capability information indicates whether the terminal device supports the first capability, the network device may determine the N-TDW based on the capability information, the auxiliary information, a data scheduling scheme, and a capability of the network device. For example, when the capability information indicates whether the network device supports the first capability, the network device may determine the N-TDW based on the capability information, the auxiliary information, and a data scheduling scheme.

After determining the N-TDW, the network device may send information about the N-TDW determined by the network device to the terminal device, so that the terminal device can determine, based on the N-TDW, time for the TA adjustment, time for the frequency offset adjustment, or the like. For example, the information about the N-TDW includes the following information: start position (which may also be referred to as start point or start time) of the N-TDW and duration of the N-TDW; or start position of the N-TDW and end position (which may also be referred to as end point or end time) of the N-TDW. Alternatively, the information about the N-TDW may include any one or more of start position, duration, and end position of the N-TDW. A measurement unit of the position or the duration in the information about the N-TDW is not limited in this embodiment of this application.

In an example, in the N-TDW, the terminal device may further divide the N-TDW into a plurality of A-TDWs based on a trigger condition of the A-TDW. For descriptions of the trigger condition, refer to the foregoing descriptions. Details are not described herein again. In another example, a trigger condition of the A-TDW may be defined in a protocol, and that a new A-TDW is triggered at an interval of 10 slots in the N-TDW may be defined in the protocol. To be specific, a start point (which may also be understood as a start position, start time, or the like) of the A-TDW may be defined in a protocol. In another example, a trigger condition of the A-TDW may alternatively be configured by the network device. For example, the network device may determine a start point of the A-TDW based on a TA drift rate in a cell. In this case, the network device may send the start point of the A-TDW to the terminal device. After obtaining the start point of the A-TDW, the terminal device may perform TA adjustment based on the start point. In still another example, a trigger condition of the A-TDW may alternatively be reported by the terminal device. For example, the terminal device may report a start point of the A-TDW based on time at which the terminal device performs TA adjustment. The foregoing trigger condition of the A-TDW may also be understood as restarting an A-TDW or resetting a window of the A-TDW based on the foregoing trigger condition, or may be understood as a trigger condition of the start point of an A-TDW, or the like. To be specific, when the trigger conditions of the A-TDW are satisfied, a previous A-TDW is ended, and a new A-TDW is started.

In still another example, that the network device determines the TDW based on the capability information includes: The network device determines the A-TDW based on the capability information. For example, the capability duration indicated by the capability information may be used as a window size of the A-TDW. Alternatively, the window size of the A-TDW may be less than the capability duration indicated by the capability information. In still another example, that the network device determines the TDW based on the capability information includes: The network device determines the A-TDW based on the capability information and the auxiliary information. For example, a window size of the A-TDW may be a smaller one between the capability duration indicated by the capability information and the maximum duration window indicated by the auxiliary information. Alternatively, the window size of the A-TDW may be less than the foregoing smaller one.

After the network device determines the A-TDW, the network device may send information about the A-TDW determined by the network device to the terminal device, so that the terminal device can determine, based on the A-TDW, time for the TA adjustment, time for the frequency offset adjustment, or the like. In this case, an N-TDW determined by the network device may be greater than the A-TDW. A specific value of the N-TDW is not limited in this embodiment of this application. Although the network device configures the A-TDW, when the trigger condition of the A-TDW described above is satisfied, a new A-TDW is still started. For example, the information about the A-TDW includes one or more pieces of information: start position of the A-TDW, duration of the A-TDW, and end position of the A-TDW. For descriptions of the information about the A-TDW, refer to the foregoing descriptions of the N-TDW. Details are not described herein again.

The network device may properly configure the window size of the N-TDW or the window size of the A-TDW based on the capability information reported by the terminal device, to increase the size of the window used for the joint channel estimation as much as possible, and improve performance of the joint channel estimation.

For terrestrial communication, a terminal device having a strong capability may not only perform TA adjustment, but also ensure phase continuity of a plurality of signals sent by the terminal device. However, even if the phase continuity of the plurality of signals can be ensured, for the terminal device, an A-TDW is still ended and a new A-TDW is started due to the TA adjustment. Consequently, performance of joint channel estimation is affected.

However, in this embodiment of this application, the terminal device reports the capability information, so that the network device can effectively learn whether the terminal device has the first capability. If the terminal device has the first capability, the terminal device may ensure the phase continuity of the plurality of signals when performing TA adjustment, and may further increase the size of the A-TDW (in comparison with the manner of the foregoing terrestrial communication). In this way, the performance of the joint channel estimation is ensured. Because non-terrestrial communication has a feature of wide coverage, coverage enhancement of the non-terrestrial communication may be further implemented when performance of joint channel estimation in the non-terrestrial communication is improved. It may be understood that the beneficial effects described herein are also applicable to downlink communication.

It may be understood that the method described in this embodiment of this application focuses on maintaining the phase continuity of the plurality of signals when the terminal device performs TA adjustment. In other words, the phase continuity of the plurality of signals can still be ensured even if the terminal device performs TA adjustment. In this way, starting of a new A-TDW is not triggered, and the joint channel estimation can continue to be smoothly performed in the current window. During specific implementation, there is another condition for performing joint channel estimation, for example, receive power of the plurality of signals being consistent, or being in a specific value range. In this embodiment of this application, it is considered by default that the receive power of the plurality of signals satisfies a requirement for performing joint channel estimation. In other words, when there is another condition for performing joint channel estimation, it is considered by default that the method provided in this embodiment of this application satisfies a requirement of the another condition.

The capability information is described below in detail, and related descriptions of detailed content of the capability information may be as follows.

### Implementation 1:

The capability information indicates whether the first communication apparatus supports the first capability.

In an example, when the capability information indicates that the first communication apparatus does not support the first capability, it may indicate that division into A-TDWs is triggered when the terminal device performs TA adjustment, or a new A-TDW is started when the terminal device performs TA adjustment. In other words, once a TA adjustment event occurs, a new A-TDW is triggered. In other words, that the terminal device performs TA adjustment affects the start point of the A-TDW. It may be understood that, for another trigger condition of the A-TDW, refer to the foregoing descriptions. Details are not described herein again.

In another example, when the capability information indicates that the first communication apparatus supports the first capability, it may indicate that the first communication apparatus supports the first capability in any capability duration. For example, regardless of a size of the TDW, the first communication apparatus may maintain phase continuity of a plurality of signals when the terminal device performs TA adjustment. For example, when the terminal device supports the first capability, TA adjustment performed by the terminal device does not cause division into A-TDWs. In this case, the N-TDW configured by the network device may not be divided into a plurality of A-TDWs.

For Implementation 1, in at least one of cases that a protocol defines the start point of the A-TDW, the network device configures the start point of the A-TDW, and the terminal device reports at the start point of the A-TDW, a new A-TDW is still triggered when the start point of the A-TDW is reached, or the N-TDW is still divided into A-TDWs.

### Implementation 2:

The capability information includes capability duration. The capability duration indicates duration for which the first communication apparatus maintains phase continuity of a plurality of signals when the terminal device performs TA adjustment. In other words, the capability duration may indicate a period of time in which the first communication apparatus can maintain phase continuity of a plurality of signals. Different capability duration may represent different capability levels (or understood as capability magnitudes). In other words, the capability information may indicate a capability level of the first communication apparatus. It may be understood that the capability duration described embodiments of this application may also be referred to as a duration window, a capability duration window, a duration window length, a capability level, or the like. The capability duration described in embodiment of this application may also be understood as a maximum window length for maintaining the phase continuity of the plurality of signals when the terminal device performs TA adjustment (or time-frequency synchronization). Therefore, the capability duration may also be referred to as a maximum window length or a maximum window length.

For example, a time unit of the capability duration is any one of slot, symbol, millisecond, second, subframe, or the like. The time unit of the capability duration is not limited in embodiments of this application. For ease of description, slot is used as an example below for description.

In an example, a value of the capability duration may start from 0. For example, the capability duration being equal to 0 indicates that the first communication apparatus does not support the first capability. For another example, the capability duration being greater than 0 indicates that the first communication apparatus supports the first capability.

In another example, a value of the capability duration may start from a positive number. For example, the capability information includes the capability duration to indicate that the first communication apparatus supports the first capability.

For example, the value of the capability duration may be 0 (or may not include 0), 10 slots, 20 slots, 30 slots, or the like. For another example, the value of the capability duration may be 0 (or may not include 0), 5 slots, 10 slots, 15 slots, 20 slots, or the like. For another example, the value of the capability duration may be 0 (or may not include 0), 5 slots, 10 slots, 20 slots, or the like. For the value of the capability duration, details are not listed one by one in embodiments of this application.

For example, a UE 1 may ensure phase continuity and an uplink time-frequency offset synchronization requirement simultaneously in 10 slots. For another example, a UE 2 may ensure phase continuity and uplink time-frequency offset synchronization requirements in 20 slots.

The value of the capability duration may be determined by the first communication apparatus based on the hardware capability of the first communication apparatus. Alternatively, the value of the capability duration may be some fixed values broadcast by the network device. For example, the network device broadcasts some values of the capability duration, and the terminal device determines, based on a hardware capability of the terminal device, a value from the foregoing values as the capability duration, and then reports the capability duration. For another example, the network device broadcasts some values of capability duration, and the terminal device determines, based on at least one of a speed relationship between the terminal device and a satellite, a location relationship between the terminal device and the satellite, and a TA drift rate, a value from the foregoing values as the capability duration, and then reports the capability duration. Alternatively, the value of the capability duration may be some fixed values defined in a protocol, for example, some values of the capability duration defined in the protocol. For a specific manner in which the first communication apparatus determines the capability duration from the value defined in the protocol, refer to related descriptions of the value broadcast by the network device. Details are not described herein again. For example, based on the foregoing determining manner, the first communication apparatus may determine, from the foregoing values, maximum duration for maintaining the phase continuity of the plurality of signals when the TA adjustment is performed.

For example, the capability duration may be for determining an A-TDW or an N-TDW. For related descriptions of the A-TDW or the N-TDW, refer to step 302. Details are not described herein again. For example, an N-TDW configured by the network device is 32 slots, and capability duration reported by a UE is 12 slots (which indicates that phase continuity of a plurality of signals cannot be ensured at an interval of 12 slots). At a condition that no other event triggers the A-TDW, the UE triggers the A-TDW at an interval of 12 slots. When there is another trigger event, for example, if another event triggers the A-TDW in a 5^{th} slot, the UE may first perform TA adjustment at the start point of the A-TDW, and then ensure the phase continuity of the plurality of signals in subsequent 12 slots. It may be understood that the foregoing another trigger event may include a trigger event other than the TA adjustment, the time offset adjustment, and the frequency offset adjustment, for example, power jump, resource change, and uplink-downlink switching. In other words, a start point of a window that ensures the phase continuity of the plurality of signals is not only related to the capability duration, but also related to the another trigger event.

It may be understood that, because time occupied by the UE to perform TA adjustment is short (or the occupied time is less than or equal to specific time), the time for the UE to perform TA adjustment at the start point of the A-TDW may be ignored. Therefore, the UE may maintain the phase continuity of the plurality of signals in the subsequent 12 slots. It is clear that if the time occupied by the UE to perform TA adjustment is long, for example, the occupied time is equal to one slot, the UE may maintain the phase continuity of the plurality of signals in subsequent 11 slots.

In this embodiment of this application, the first communication apparatus may report different capability levels, so that a reporting manner is more flexible.

### Implementation 3:

The capability information may include a capability index. There is a correspondence between the capability index and the capability duration. Each capability duration described in Implementation 2 may correspond to one index. In other words, in Implementation 3, the capability information indicates the capability duration by including the capability index.

In an example, the correspondence may be defined in a protocol. For example, different capability levels (that is, different capability duration) are specified in a table, and different capability levels correspond to different duration window lengths (which may also be understood as that different capability levels correspond to different duration windows or capability duration). In another example, the correspondence may be configured by the network device. For example, the network device may indicate the correspondence in a broadcast or unicast manner. For other descriptions of Implementation 3, refer to Implementation 2. Details are not described herein again.

In this embodiment of this application, the first communication apparatus may report indexes of different capability duration (or capability levels), to reduce signaling overheads.

### Implementation 4:

In Implementation 2 and Implementation 3, the capability duration indicated by the capability information may be a preset fixed value. In this embodiment of this application, the first communication apparatus may determine the capability duration based on a TA drift rate of the terminal device, a location relationship between the terminal device and the first communication apparatus, and a speed relationship between the terminal device and the first communication apparatus.

In an example, the capability duration for which the terminal device maintains phase continuity and time-frequency offset synchronization varies in different satellite elevation angles. For example, when an elevation angle of a satellite relative to the terminal device is small or large, the TA drift rate is large, and the capability duration for which the terminal device maintains the phase continuity and the time-frequency offset synchronization is short. On the contrary, when the elevation angle of the satellite relative to the terminal device is close to 90 degrees, the TA drift rate is small, and the capability duration for which a UE maintains the phase continuity and the time-frequency offset synchronization is long. Therefore, the terminal device may determine different capability duration based on different satellite elevation angles. A specific relationship between the satellite elevation angle and the capability duration is not limited in this embodiment of this application. For example, if an orbital altitude of the satellite is LEO 600 km, and the satellite elevation angle is 30 degrees, the terminal device may maintain phase continuity of a plurality of signals in 20 ms.

In another example, for satellites with different orbital altitudes, the capability duration for which the terminal device can maintain the phase continuity and the time-frequency offset synchronization is also different. For example, a TA drift rate for a low orbital altitude is greater than a TA drift rate for a high orbital altitude. Therefore, for a low orbital altitude, the capability duration corresponding to the terminal device is short, and for a high orbital altitude, the capability duration corresponding to the terminal device is long. The satellite elevation angle or the orbital altitude described above may be understood as a location relationship between the first communication apparatus and the second communication apparatus. For example, the speed relationship between the first communication apparatus and the second communication apparatus may include a Doppler frequency. The Doppler frequency may affect frequency offset adjustment between the two communication parties. Details are not described herein again.

In still another example, there is a correspondence between the TA drift rate and the capability duration, or a relationship between the TA drift rate and the capability duration is a correspondence. For related descriptions of the relationship between the TA drift rate and the capability duration, adaptively refer to the descriptions of the correspondence described in Implementation 3. Details are not described herein again. For example, the first communication apparatus may indicate the capability duration by reporting an index of the relationship between the TA drift rate and the capability duration (where for example, the index relationship described herein may be defined by a protocol, configured by the network device, or the like). For another example, the network device may determine, based on the TA drift rate of the terminal device, a maximum window length supported by the terminal device. In other words, both the terminal device and the network device may store the correspondence between the TA drift rate and the capability duration, so that both the terminal device and the network device can learn of the capability duration based on the TA drift rate. It may be understood that the correspondence between the TA drift rate and the capability duration may be determined based on a relationship between a value of the TA drift rate and a value of the capability duration, or may be a formula relationship between the TA drift rate and the capability duration. A specific manner of the correspondence is not limited in this embodiment of this application.

In embodiments of this application, the capability duration reported by the terminal device may be not only the duration for maintaining the phase continuity of the plurality of signals when the terminal device performs TA adjustment, but also the duration for maintaining the time-frequency synchronization. Alternatively, because the TA drift rate may change in real time, the duration for maintaining the phase continuity of the plurality of signals when the TA adjustment is performed also changes in real time. Therefore, the terminal device may separately report the duration for maintaining the phase continuity of the plurality of signals when the terminal device performs TA adjustment and the duration for maintaining the time-frequency synchronization.

In this embodiment of this application, the capability duration is determined based on the TA drift rate, so that the reported capability duration is more accurate.

It may be understood that during actual application, the first communication apparatus may separately report a plurality of pieces of capability information. For example, when the capability duration changes, the first communication apparatus may report updated capability duration. For example, the first communication apparatus may report the updated capability duration in a differential manner, in other words, the capability information may indicate a difference. In an example, the difference may be a difference between capability duration reported initially (or referred to as for the first time) and capability duration reported currently. In another example, the difference may be a difference between capability duration reported last time and capability duration reported this time. The capability duration is reported in a differential reporting manner, so that signaling overheads can be reduced.

For the foregoing embodiments (including the foregoing implementations), when the terminal device performs TA adjustment in the TDW, if overlapping between OFDM symbols or sampling points is caused due to the TA adjustment, the terminal device discards a signal in an overlapping part by discarding a sampling point or an OFDM symbol. A measurement unit of the overlapping part may be OFDM symbol or sampling point, or may be another unit. This is not listed one by one herein. It may be understood that descriptions of discarding herein are also applicable to the network device.

A communication apparatus provided in embodiments of this application is described below.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The communication apparatus in embodiments of this application is described below in detail with reference to FIG. 4 to FIG. 6.

FIG. 4 is a diagram of a structure of a communication apparatus according to an embodiment of this application. As shown in FIG. 4, the communication apparatus includes a processing unit 401 and a transceiver unit 402. The transceiver unit 402 may implement a corresponding communication function, and the processing unit 401 is configured to process data. For example, the transceiver unit 402 may also be referred to as an interface, a communication interface, a communication unit, or the like.

In some embodiments of this application, the communication apparatus may be configured to perform an action performed by the first communication apparatus in the foregoing method embodiments. In this case, the communication apparatus may be a terminal device or a component (for example, a chip or a system) that may be disposed in the terminal device. The transceiver unit 402 is configured to perform a receiving/sending-related operation of the terminal device in the foregoing method embodiments. The processing unit 401 is configured to perform a processing-related operation of the terminal device in the foregoing method embodiments.

For example, the processing unit 401 is configured to generate capability information, and the transceiver unit 402 is configured to output or send the capability information.

For example, the transceiver unit 402 is further configured to input or receive information about a TDW.

For example, the processing unit 401 is further configured to determine the TDW based on the information about the TDW.

The detailed descriptions of the transceiver unit and the processing unit described in this embodiment of this application are merely examples. For specific functions, performed steps, or the like of the transceiver unit and the processing unit, refer to the foregoing method embodiments. Details are not described herein again.

Optionally, the communication apparatus may further include a storage unit. The storage unit may be configured to store instructions and/or data. The processing unit 401 may read the instructions and/or the data in the storage unit, to enable the communication apparatus to implement the foregoing method embodiments. For example, the storage unit may be configured to store the foregoing correspondence, the foregoing table, or the like.

FIG. 4 is reused. In some other embodiments of this application, the communication apparatus may be configured to perform an action performed by the second communication apparatus in the foregoing method embodiments. In this case, the communication apparatus may be a network device or a component that may be disposed in the network device. The transceiver unit 402 is configured to perform a receiving/sending-related operation of the network device in the foregoing method embodiments. The processing unit 401 is configured to perform a processing-related operation of the network device in the foregoing method embodiments.

For example, the transceiver unit 402 is configured to receive or input capability information, and the processing unit 401 determines, based on the capability information, whether the first communication apparatus supports a first capability.

For example, the processing unit 401 is further configured to determine a TDW based on the capability information. For example, the transceiver unit 402 is further configured to send or output information about the TDW. Alternatively, the transceiver unit 402 is further configured to input or receive information about the TDW.

In the foregoing embodiments, for descriptions of the capability information, the first capability, the plurality of signals, the TDW, and the like, refer to the descriptions in the foregoing method embodiments. Details are not described herein again.

It may be understood that the detailed descriptions of the transceiver unit and the processing unit described in this embodiment of this application are merely examples. For specific functions, performed steps, or the like of the transceiver unit and the processing unit, refer to the foregoing method embodiments. Details are not described herein again.

The foregoing describes the communication apparatus in embodiments of this application. The following describes a possible product form of the communication apparatus. It should be understood that any product in any form that has a function of the communication apparatus in FIG. 4 falls within the protection scope of embodiments of this application. It should be further understood that the following descriptions are merely examples, and do not limit the product form of the communication apparatus in embodiments of this application.

In a possible implementation, in the communication apparatus shown in FIG. 4, the processing unit 401 may be one or more processors, and the transceiver unit 402 may be a transceiver. Alternatively, the transceiver unit 402 may be a sending unit and a receiving unit. The sending unit may be a transmitter, and the receiving unit may be a receiver. The sending unit and the receiving unit are integrated into one device, for example, a transceiver. In embodiments of this application, the processor and the transceiver may be coupled or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed before the information is input into the processor.

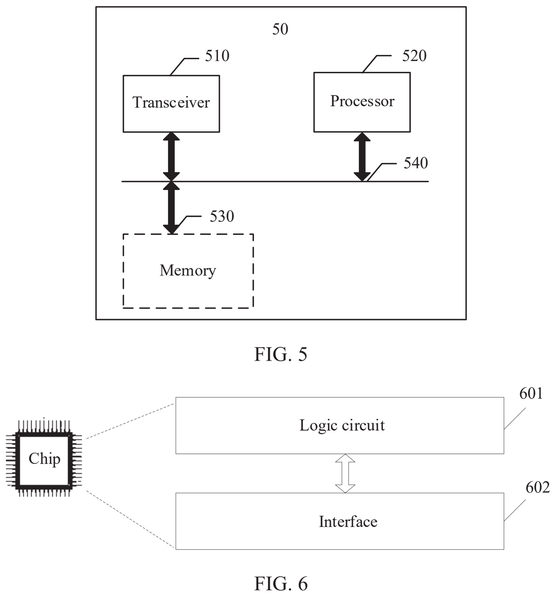

As shown in FIG. 5, a communication apparatus 50 includes one or more processors 520 and a transceiver 510.

For example, when the communication apparatus is configured to perform the step, the method, or the function performed by the foregoing first communication apparatus or the terminal device, the processor 520 is configured to generate capability information, and the transceiver 510 is configured to send the capability information.

For example, the transceiver 510 is further configured to receive information about a TDW.

For example, the processor 520 is further configured to determine the TDW based on the information about the TDW.

For example, when the communication apparatus is configured to perform the step, the method, or the function performed by the foregoing second communication apparatus or the network device, the transceiver 510 is configured to receive the capability information, and the processor 520 determines, based on the capability information, whether the first communication apparatus supports a first capability.

For example, the processor 520 is further configured to determine a TDW based on the capability information. For example, the transceiver 510 is further configured to send information about the TDW. Alternatively, the transceiver 510 is further configured to receive information about the TDW.

In the foregoing embodiments, for descriptions of the capability information, the first capability, the plurality of signals, the TDW, and the like, refer to the descriptions in the foregoing method embodiments. Details are not described herein again. It may be understood that for detailed descriptions of the processor and the transceiver, refer to the descriptions of the processing unit and the transceiver unit shown in FIG. 4. Details are not described herein again.

In implementations of the communication apparatus shown in FIG. 5, the transceiver may include a receiver machine and a transmitter machine. The receiver machine is configured to perform a receiving function (or operation), and the transmitter machine is configured to perform a transmitting function (or operation). In addition, the transceiver is configured to communicate with another device/apparatus through a transmission medium.

Optionally, the communication apparatus 50 may further include one or more memories 530, configured to store program instructions and/or data. The memory 530 is coupled to the processor 520. The coupling in this embodiment of this application may be an indirect coupling or a communication connection between apparatuses, units, or modules in an electrical form, a mechanical form, or another form, and is for information exchange between the apparatuses, the units, or the modules. The processor 520 may cooperate with the memory 530. The processor 520 may execute the program instructions stored in the memory 530. Optionally, at least one of the one or more memories may be included in the processor. In this embodiment of this application, the memory 530 may store initial valid duration, a maximum quantity, maximum prolonged duration, or the like of a GNSS. For example, the memory shown in FIG. 5 shows only valid duration of the GNSS as an example.

A specific connection medium between the transceiver 510, the processor 520, and the memory 530 is not limited in this embodiment of this application. In this embodiment of this application, in FIG. 5, the memory 530, the processor 520, and the transceiver 510 are connected by using a bus 540. The bus is indicated by using a bold line in FIG. 5. A connection manner between other components is merely an example for description, and is not limited thereto. The bus may include an address bus, a data bus, a control bus, and the like. For ease of representation, only one bold line is used for representation in FIG. 5, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like, and may implement or perform the methods, steps, and logical block diagrams disclosed in embodiments of this application. The general-purpose processor may be a microprocessor, any conventional processor, or the like. The steps of the method with reference to embodiments of this application may be directly performed and completed by a hardware processor, or may be performed and completed by using a combination of hardware and software modules in the processor, or the like.

In embodiments of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this is not limited thereto. The memory in embodiments of this application may alternatively be a circuit or any other apparatus that can implement a storage function, and is configured to store the program instructions and/or the data.

The processor 520 is mainly configured to process a communication protocol and communication data, control the entire communication apparatus, execute a software program, and process data of the software program. The memory 530 is mainly configured to store a software program and data. The transceiver 510 may include a control circuit and an antenna. The control circuit is mainly configured to perform conversion between a baseband signal and a radio frequency signal and process the radio frequency signal. The antenna is mainly configured to send and receive a radio frequency signal in a form of an electromagnetic wave. An input/output apparatus, for example, a touchscreen, a display screen, or a keyboard, is mainly configured to receive data input by a user and output data to the user.

After the communication apparatus is powered on, the processor 520 may read the software program in the memory 530, interpret and execute instructions of the software program, and process data of the software program. When data needs to be sent in a wireless manner, the processor 520 performs baseband processing on to-be-sent data, and then outputs a baseband signal to a radio frequency circuit. The radio frequency circuit performs radio frequency processing on the baseband signal, and then sends a radio frequency signal in an electromagnetic wave form via the antenna. When data is sent to the communication apparatus, the radio frequency circuit receives a radio frequency signal via the antenna, converts the radio frequency signal into a baseband signal, and outputs the baseband signal to the processor 520, and the processor 520 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further include more components and the like than those in FIG. 5. This is not limited in this embodiment of this application. The methods performed by the processor and the transceiver are merely examples. For specific steps performed by the processor and the transceiver, refer to the method described above.

For example, an embodiment of this application further provides a network device. The network device may include an active antenna unit (active antenna unit, AAU) and a baseband unit (baseband unit, BBU). The BBU may be a component of a distributed base station, and mainly completes baseband processing (for example, channel coding, channel demodulation, modulation, and demodulation) of a signal, provides functions such as transmission management and an interface, manages radio resources, and provides a clock signal.

In another possible implementation, in the communication apparatus shown in FIG. 4, the processing unit 401 may be one or more logic circuits, and the transceiver unit 402 may be an input/output interface, or referred to as a communication interface, an interface circuit, an interface, or the like. Alternatively, the transceiver unit 402 may be a sending unit and a receiving unit. The sending unit may be an output interface, and the receiving unit may be an input interface. The sending unit and the receiving unit are integrated into one unit, for example, an input/output interface. As shown in FIG. 6, a communication apparatus shown in FIG. 6 includes a logic circuit 601 and an interface 602. In other words, the processing unit 401 may be implemented by using the logic circuit 601, and the transceiver unit 402 may be implemented by using the interface 602. The logic circuit 601 may be a chip, a processing circuit, an integrated circuit, a system on chip (system on chip, SoC), or the like. The interface 602 may be a communication interface, an input/output interface, a pin, or the like. For example, FIG. 6 shows an example in which the communication apparatus is a chip. The chip includes the logic circuit 601 and the interface 602.

In this embodiment of this application, the logic circuit and the interface may be coupled to each other. A specific manner of connection between the logic circuit and the interface is not limited in this embodiment of this application.

For example, when the communication apparatus is configured to perform the method, the function, or the step performed by the foregoing first communication apparatus or the terminal device, the logic circuit 601 is configured to generate capability information, and the interface 602 is configured to output the capability information.

For example, the interface 602 is further configured to input information about a TDW.

For example, the logic circuit 601 is further configured to determine the TDW based on the information about the TDW.

For example, when the communication apparatus is configured to perform the method, the function, or the step performed by the foregoing second communication apparatus or the network device, the interface 602 is configured to input capability information, and the logic circuit 601 determines, based on the capability information, whether the first communication apparatus supports a first capability.

For example, the logic circuit 601 is further configured to determine a TDW based on the capability information. For example, the interface 602 is further configured to output information about the TDW. Alternatively, the interface 602 is further configured to input information about the TDW.

For example, the chip shown in FIG. 6 may further include a memory, and the memory may be configured to store the foregoing correspondence, the foregoing table, or the like.

It may be understood that the communication apparatus described in this embodiment of this application may implement the method provided in embodiments of this application in a form of hardware, or may implement the method provided in embodiments of this application in a form of software. This is not limited in embodiments of this application.

In the foregoing embodiments, for descriptions of the capability information, the first capability, the plurality of signals, the TDW, and the like, refer to the descriptions in the foregoing method embodiments. Details are not described herein again. For specific implementations of the embodiment shown in FIG. 6, further refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is for implementing an operation and/or processing performed by the first communication apparatus in the method provided in this application.

This application further provides a computer program. The computer program is for implementing an operation and/or processing performed by the second communication apparatus in the method provided in this application.

This application further provides a computer-readable storage medium. The computer-readable storage medium stores computer code. When the computer code is run on a computer, the computer is enabled to perform an operation and/or processing performed by the first communication apparatus in the method provided in this application.

This application further provides a computer-readable storage medium. The computer-readable storage medium stores computer code. When the computer code is run on a computer, the computer is enabled to perform an operation and/or processing performed by the second communication apparatus in the method provided in this application.

This application further provides a computer program product. The computer program product includes computer code or a computer program. When the computer code or the computer program is run on a computer, an operation and/or processing performed by the first communication apparatus in the method provided in this application are/is performed.

This application further provides a computer program product. The computer program product includes computer code or a computer program. When the computer code or the computer program is run on a computer, an operation and/or processing performed by the second communication apparatus in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings, or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the method described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method comprises:
generating, by a first communication apparatus, capability information, wherein the capability information indicates whether the first communication apparatus supports a first capability, the first capability is a capability of maintaining, by the first communication apparatus, phase continuity of a plurality of signals when a terminal device performs at least one of timing advance TA adjustment, time offset adjustment, and frequency offset adjustment, the plurality of signals are used for joint channel estimation, and the first communication apparatus comprises the terminal device or a network side apparatus serving the terminal device; and
sending, by the first communication apparatus, the capability information.

2. The method according to claim 1, wherein the capability information comprises capability duration, and the capability duration indicates duration for which the first communication apparatus maintains the phase continuity of the plurality of signals when the terminal device performs at least one of the TA adjustment, the time offset adjustment, and the frequency offset adjustment.

3. The method according to claim 1, wherein the capability information comprises a capability index, there is a correspondence between the capability index and capability duration, the capability duration indicates duration for which the first communication apparatus maintains the phase continuity of the plurality of signals when the terminal device performs at least one of the TA adjustment, the time offset adjustment, and the frequency offset adjustment, and the correspondence is defined in a protocol or configured by a network device.

4. The method according to claim 2 or 3, wherein the capability duration is determined based on at least one of the following information:
a speed relationship between the first communication apparatus and a second communication apparatus, wherein the first communication apparatus comprises the terminal device, and the second communication apparatus comprises the network side apparatus serving the terminal device; or the first communication apparatus comprises the network side apparatus serving the terminal device, and the second communication apparatus is the terminal device;
a location relationship between the first communication apparatus and the second communication apparatus, wherein the first communication apparatus comprises the terminal device, and the second communication apparatus comprises the network side apparatus serving the terminal device; or the first communication apparatus comprises the network side apparatus serving the terminal device, and the second communication apparatus is the terminal device; and
a TA drift rate of the first communication apparatus, wherein the first communication apparatus comprises the terminal device.

5. The method according to any one of claims 1 to 4, wherein the first communication apparatus comprises the terminal device, and the method further comprises:
receiving information about a time domain window TDW, wherein the TDW is a window used for joint channel estimation; and
determining the TDW based on the information about the TDW.

6. The method according to any one of claims 1 to 4, wherein the first communication apparatus comprises the network side apparatus serving the terminal device, and the method further comprises:
sending information about a time domain window TDW, wherein the TDW is a window used for joint channel estimation.

7. The method according to claim 5 or 6, wherein the information about the TDW comprises the following information: start position of the TDW and duration of the TDW; or start position of the TDW and end position of the TDW.

8. The method according to any one of claims 2 to 7, wherein the capability duration being equal to 0 indicates that the first communication apparatus does not support the first capability, and the capability duration being greater than 0 indicates that the first communication apparatus supports the first capability.

9. The method according to any one of claims 2 to 8, wherein a time unit of the capability duration is any one of the following: slot, symbol, millisecond, second, and subframe.

10. A satellite communication method, wherein the method comprises:
receiving, by a second communication apparatus, capability information, wherein the capability information indicates whether a first communication apparatus supports a first capability, the first capability is a capability of maintaining, by the first communication apparatus, phase continuity of a plurality of signals when a terminal device performs at least one of timing advance TA adjustment, time offset adjustment, and frequency offset adjustment, and the plurality of signals are used for joint channel estimation; and the second communication apparatus comprises a network side apparatus serving the terminal device, and the first communication apparatus comprises the terminal device; or the second communication apparatus comprises the terminal device, and the first communication apparatus comprises a network side apparatus serving the terminal device; and
determining, by the second communication apparatus based on the capability information, whether the first communication apparatus supports the first capability.

11. The method according to claim 10, wherein the second communication apparatus comprises the network side apparatus serving the terminal device, and the method further comprises:
determining a time domain window TDW based on the capability information, wherein the TDW is a window used for joint channel estimation; and
sending information about the TDW.

12. The method according to claim 10, wherein the second communication apparatus comprises the terminal device, and the method further comprises:
receiving information about a time domain window TDW, wherein the TDW is a window used for joint channel estimation.

13. The method according to claim 11 or 12, wherein the information about the TDW comprises the following information: start position of the TDW and duration of the TDW; or start position of the TDW and end position of the TDW.

14. The method according to any one of claims 10 to 13, wherein the capability information comprises capability duration, and the capability duration indicates duration for which the first communication apparatus maintains the phase continuity of the plurality of signals when the terminal device performs at least one of the TA adjustment, the time offset adjustment, and the frequency offset adjustment.

15. The method according to any one of claims 10 to 13, wherein the capability information comprises a capability index, there is a correspondence between the capability index and capability duration, the capability duration indicates duration for which the first communication apparatus maintains the phase continuity of the plurality of signals when the terminal device performs at least one of the TA adjustment, the time offset adjustment, and the frequency offset adjustment, and the correspondence is defined in a protocol or configured by a network device.

16. The method according to claim 14 or 15, wherein the capability duration is determined based on at least one of the following information:
a speed relationship between the first communication apparatus and the second communication apparatus, wherein the first communication apparatus comprises the terminal device, and the second communication apparatus comprises the network side apparatus serving the terminal device; or the first communication apparatus comprises the network side apparatus serving the terminal device, and the second communication apparatus is the terminal device;
a location relationship between the first communication apparatus and the second communication apparatus, wherein the first communication apparatus comprises the terminal device, and the second communication apparatus comprises the network side apparatus serving the terminal device; or the first communication apparatus comprises the network side apparatus serving the terminal device, and the second communication apparatus is the terminal device; and
a TA drift rate of the first communication apparatus, wherein the first communication apparatus comprises the terminal device.

17. The method according to any one of claims 14 to 16, wherein the capability duration being equal to 0 indicates that the first communication apparatus does not support the first capability, and the capability duration being greater than 0 indicates that the first communication apparatus supports the first capability.

18. The method according to any one of claims 14 to 17, wherein a time unit of the capability duration is any one of the following: slot, symbol, millisecond, second, and subframe.

19. A communication apparatus, comprising a unit configured to perform the method according to any one of claims 1 to 18.

20. A communication apparatus, comprising a processor, wherein the processor is configured to perform the method according to any one of claims 1 to 18.

21. The communication apparatus according to claim 20, wherein the communication apparatus is a chip.

22. A communication apparatus, comprising a logic circuit and an interface, wherein the logic circuit is coupled to the interface; and
the interface is configured to input and/or output information, and the logic circuit is configured to perform the method according to any one of claims 1 to 18.

23. A computer-readable storage medium, wherein the computer-readable storage medium is configured to store a computer program, and when the computer program is executed, the method according to any one of claims 1 to 18 is performed.

24. A computer program, wherein when the computer program is executed, the method according to any one of claims 1 to 18 is performed.

25. A communication system, comprising a first communication apparatus and a second communication apparatus, wherein the first communication apparatus is configured to perform the method according to any one of claims 1 to 9, and the second communication apparatus is configured to perform the method according to any one of claims 10 to 18.
